# EUROPEAN PATENT SPECIFICATION

(11) **EP 0 703 378 B1**
(45) Date of publication and mention of the grant of the patent: **05.12.2001**
(21) Application number: 94830448.0
(22) Date of filing: 22.09.1994
(51) Int. Cl.: F16D 65/097

(54) **Disc brake friction pad and retention system**
Scheibenbremsbelag und Haltesystem
Patin pour frein à disque et système de maintien

(43) Date of publication of application: 27.03.1996
(73) Proprietor: Meritor Heavy Vehicle Technology LLC, Troy, Michigan 48084 (US)
(72) Inventor: Forni, Roberto, I-28062 Cameri, Novara (IT); Harrup, Clive, Bromham, Bedfordshire MK43 8JA (GB); Sacchi, Giovanni, I-28019 Suno, Novara (IT)
(74) Representative: Kitzhofer, Thomas, Dipl.-Ing.

(56) References cited:
- EP-A- 0 248 385
- WO-A-92/00465
- FR-A- 2 461 161

## Description

### BACKGROUND OF THE INVENTION

### FIELD OF THE INVENTION

The present invention relates to a disc brake comprising a retention system for a friction pad.

### DESCRIPTION OF THE RELATED ART

The present invention is particularly applicable to a disc brake assembly of the type which includes a rotor mounted for rotation with a vehicle wheel and a caliper straddling the periphery of the rotor. Friction pads are carried by the caliper on opposite sides of the rotor and are movable into contact with oppositely disposed friction surfaces of the rotor by actuating means driven by an air actuator. In a caliper disc brake, each friction pad is located intermediate one leg of the caliper and the adjacent friction surface of the rotor. The actuating mechanism is usually carried by one leg of the caliper and serves to move the friction pad adjacent to that leg axially into contact with the rotor. The reaction force of such contact serving to draw the other leg of the caliper and the corresponding other friction pad into contact with the opposite surface of the rotor.

Although various arrangements are known for supporting friction pads within a disc brake assembly, some require additional elements for preventing inadvertent displacement of the friction pads away from their operative position and others require disassembly of parts or retraction of the actuating mechanism to replace the friction pads which may not be easily accomplished. Others relying on radially converging edges or angularly disposed surfaces to support the friction pad or to transmit torque to the supporting caliper require careful attention to tolerances during manufacture to assure proper fit and location of cooperating parts when the brake is assembled.

From document WO-A-92/00465 a disc brake comprising a retention system for a friction pad is known which comprises a backing plate including radially extending projections, a retention member having apertures positionally registering with the projections, the outer ends of the retention member providing a resilient force directed against opposing sides of the radially extending projections maintaining the retention member secured to the backing plate, and a bridge maintained in contact with the retention member. A similar disc brake system is shown in EP-A-0 248 385.

### SUMMARY OF THE INVENTION

It is an object of the present invention to provide a disc brake assembly in which the friction pads are readily accessible for inspection or replacement purposes. This object is attained by a disc brake according to claim 1. The disc brake according to the present invention has an improved friction pad and a caliper assembly having recesses defined in portions disposed proximate the friction surfaces of the rotor. Each friction pad consists of a backing plate and friction material secured to a major portion of the backing plate. Each backing plate includes a pair of circumferentially displaced radially extending projections which receive a single-piece clip having a pair of apertures defined by upturned portions which register with the projections providing a resilient interfitting structural connection. The single-piece clip includes a central portion which may be elastically deformed radially inwardly to provide a radially directed resilience to the respective assembly. When the friction pads are installed in the caliper recesses, the central portions of the single piece clip protrude radially such that a bridge installed and rotated into place across the caliper achieves displacement of the central structural portions providing a retention mechanism imparting a radially inwardly directed resilience.

These and other aspects of the present invention will become more readily apparent by reference to the following detailed description of the embodiments as shown in the drawings.

### DESCRIPTION OF THE DRAWINGS

Figure 1 is a cross sectional view of a disc brake assembly including a disc brake fraction pad having the single-piece clip of the present invention installed thereon;
Figure 2 is a plan view of the single-piece clip;
Figure 3 is a cross section of the disc brake assembly taken along lines 3-3 of Figure 1;
Figure 3A is a cross sectional view taken along lines 3A-3A of Figure 3;
Figure 4 is a plan view of a disc brake assembly of the present invention;
Figure 5 is a cross section of the backing plate and single-piece clip prior to installation; and

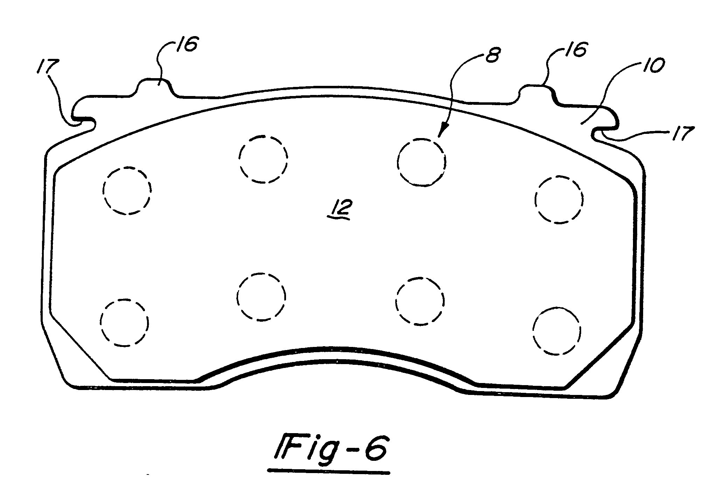

Figure 6 is a plan view of a disc brake friction pad of the present invention.

### DESCRIPTION OF THE PREFERRED EMBODIMENT

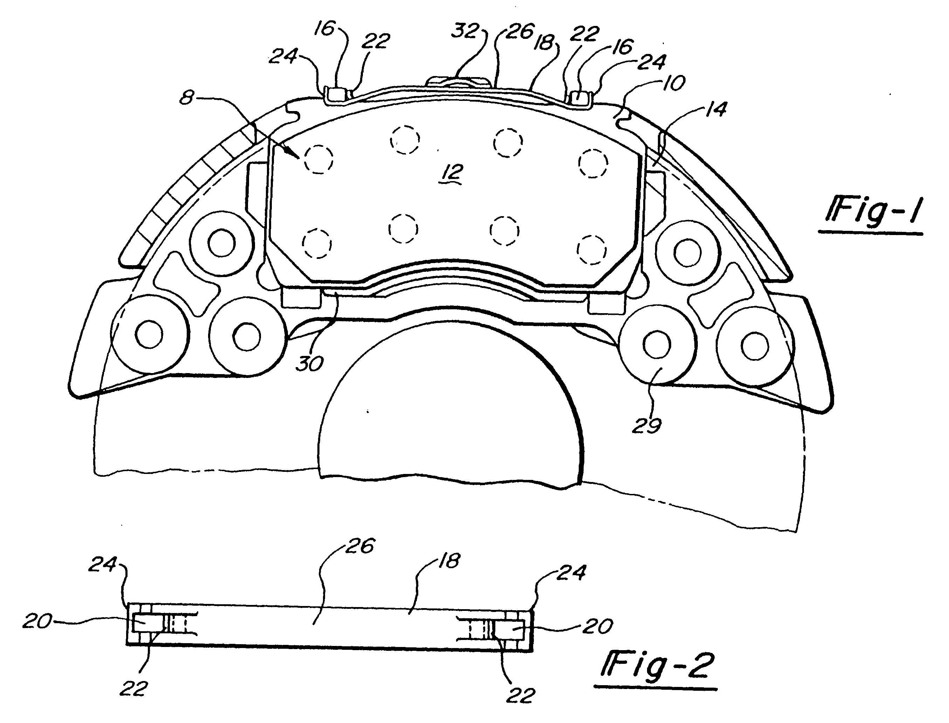

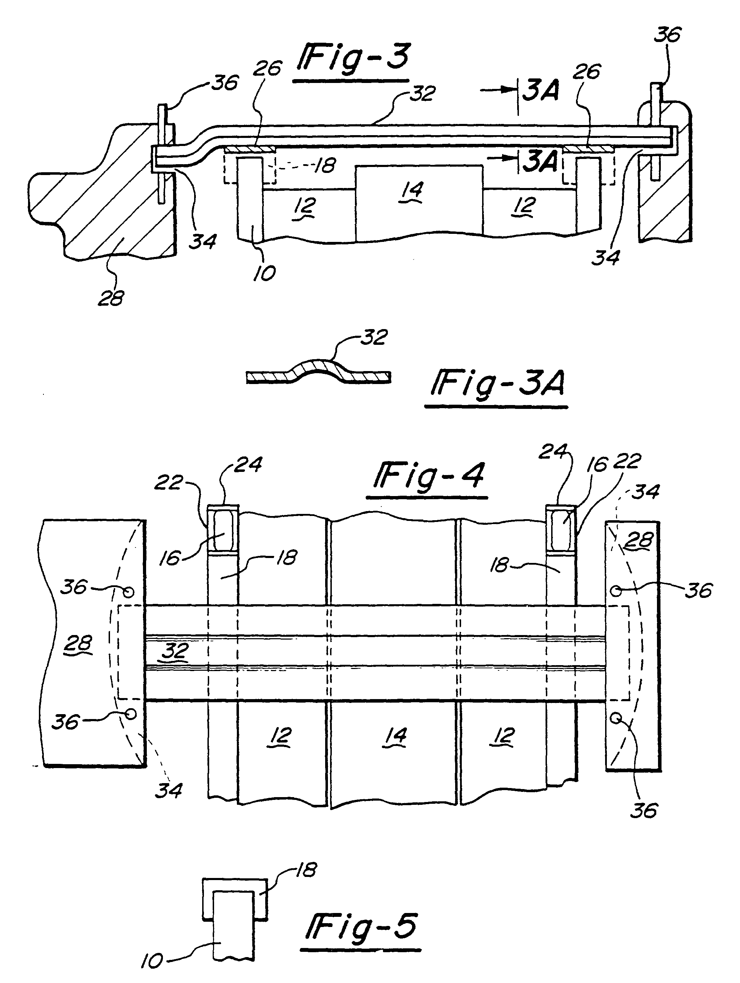

The preferred embodiment of the present invention as illustrated in Figure 1 features a backing plate 10 having a friction material 12 secured thereto. Rotor 14 is shown for reference. Circumfrentially spaced radial projections 16,16 on backing plate 10 provide structure for securance of single-piece clip 18. Single-piece clip 18 is symmetrical about a central point and includes apertures 20,20 located at opposing ends and defined by upturned portions 22,24. A resilient engagement of upturned portions 22,24 against opposing side walls of radial projections 16,16 define a structural securance maintaining contact with backing plate 10. Central portion 26 is elastically deformable over a limited range and thereby capable of providing a resilience in response to such deformation. Disc brake pad 8 may be installed within saddle 29 resting in recess 30 which provides a circumfrential and radial positional definition for brake pad 8. When disc brake pad 8 is installed in recess 30 of saddle 29, bridge 32 as shown in Figure 3 and 4 may be installed thereacross in radiused slots 34,34 defined in opposing sides of caliper 28. The radial dimension of recess 30 provides sufficient radial protrusion of portion 26 of single-piece clip 18 to facilitate partial displacement of portion 26 upon the installation of bridge 32 thereby defining a system resilience that provides an anti-rattle function. Pins 36,36 may be installed in caliper 28 to retain bridge 32 in place resistant to accelerations which may be encountered in vehicle performance. During installation, bridge 32 may be installed in radiused slots 34,34 by first inserting one end of bridge 32 in the respective radiused slot and rotating bridge 32 thereabouts thus driving bridge 32 into a position in which portion 26 is compressed. To remove brake pads 8,8, upon the necessity of maintenance procedures, the process may be reversed. First pins 36,36 are removed and bridge 32 may be rotated from caliper 28 thereby exposing disc brake pads 8,8 at which point disc brake pads 8,8 may be radially extracted from caliper 28. Circumfrentially extending opposed projections 17,17offer an engagement structure suitable for receiving a flat bladed screwdriver which may be wedged against caliper 28 to facilitate radial extraction of pads 8,8.

## Claims

1. A disc brake comprising a retention system for a friction pad, the disc brake comprising:
a backing plate (10) defined by a rectangularly shaped member including circumferentially spaced radially extending projections (16);
a retention member (18) having apertures (20) positionally registering with the projections (16);
a caliper assembly including a rotor (14) having opposing friction surfaces and being rotatable;
a bridge (32) maintained in contact with the retention member (18);
the rotor (14) having opposed caliper portions (28), each caliper portion (28) defining a recess (30) disposed for receiving a disc brake pad (8);
the apertures (20) being defined by upturned lips (22, 24) formed at opposite ends;
the upturned lips (22, 24) providing a resilient force directed against opposing sides of the circumferentially spaced radially extending projections (16) maintaining the member (18) secured to the backing plate (10);
the opposed caliper portions (28) having slots (34) formed in an outermost radial portion thereof;
said bridge (32) being disposed in the slots (34); and
the slots (34) being radiused and the bridge (32) being rotatably installed in the slots (34) of the caliper portions.

2. The disc brake of claim 1, wherein the member (18) includes an elastically deformable portion (26) which defines a radially directed resilience in reaction to displacement in such direction.

3. The disc brake of claim 1 or 2, wherein the bridge (32) is retained in the slots (34) by axially extending cylindrical members (36) disposed in openings defined in opposing ends of the slots (34).

4. The disc brake of any one of the preceding claims, wherein the retention member (18) includes an elastically deformable portion (26) which is elastically deformed by the bridge (32) after installation of the disc brake pads.

5. The disc brake of any one of the preceding claims, wherein to each recess (30) a pair of lips (22, 24) is assigned which lips (22, 24) are arranged on opposite sides of the corresponding projection (16).

## Patentansprüche

1. Scheibenbremse mit einem Haltesystem für einen Reibklotz, wobei die Scheibenbremse folgendes umfaßt:
eine Grundplatte (10), die durch ein rechteckiges Element gebildet wird und umfangsmäßig voneinander beabstandete, radial verlaufende Vorsprünge (16) umfaßt;
ein Halteelement (18) mit Öffnungen (20), die in ihrer Lage mit den Vorsprüngen (16) fluchten;
eine Bremssattelvorrichtung mit einem Rotor (14), der einander gegenüberliegende Reibflächen aufweist und drehbar ist;
eine Brücke (32), die in Kontakt mit dem Halteelement (18) gehalten wird;
wobei der Rotor (14) einander gegenüberliegende Bremssattelabschnitte (28) aufweist, und wobei jeder Bremssattelabschnitt (28) eine Ausnehmung (30) aufweist, die so angeordnet ist, daß sie einen Scheibenbremsklotz (8) aufnehmen kann;
wobei die Öffnungen (20) von nach oben gebogenen Lippen (22, 24) definiert werden, die an entgegengesetzten Enden ausgebildet sind;
wobei die nach oben gebogenen Lippen (22, 24) eine elastische Kraft ausüben, die gegen die entgegengesetzten Seiten der umfangsmäßig voneinander beabstandeten, radial verlaufenden Vorsprünge (16) gerichtet ist, so daß das Element (18) an der Grundplatte (10) festgehalten wird,
wobei die einander gegenüberliegenden Bremssattelabschnitte (28) Schlitze (34) aufweisen, die in einem äußersten radialen Abschnitt derselben ausgebildet sind;
wobei die Brücke (32) in den Schlitzen (34) angeordnet ist; und
wobei die Schlitze (34) gerundet sind und die Brücke (32) drehbar in den Schlitzen (34) der Bremssattelabschnitte gelagert ist

2. Scheibenbremse nach Anspruch 1, bei der das Element (18) einen elastisch verformbaren Abschnitt (26) umfaßt, der eine radial gerichtete Elastizität aufweist in Reaktion auf eine Verschiebung in dieser Richtung.

3. Scheibenbremse nach Anspruch 1 oder 2, bei der die Brücke (32) durch axial verlaufende zylindrische Elemente (36), die sich in Öffnungen befinden, die in den entgegengesetzten Enden der Schlitze (34) ausgebildet sind, in den Schlitzen (34) gehalten wird.

4. Scheibenbremse nach einem der vorhergehenden Ansprüche, bei der das Halteelement (18) einen elastisch verformbaren Abschnitt (26) umfaßt, der nach dem Anbringen der Scheibenbremsklötze durch die Brücke (32) elastisch verformt wird.

5. Scheibenbremse nach einem der vorhergehenden Ansprüche, bei der jeder Ausnehmung (30) zwei Lippen (22, 24) zugeordnet sind, wobei die Lippen (22, 24) auf entgegengesetzten Seiten des entsprechenden Vorsprungs (16) angeordnet sind.

## Revendications

1. Frein à disque comprenant un système de retenue pour un patin de friction, le frein à disque comprenant
une plaque d'appui (10) qui est définie par un élément de forme rectangulaire et qui présente des saillies (16) s'étendant radialement et espacées les unes des autres sur la périphérie ;
un élément de retenue (18) qui présente des ouvertures (20) dont la position est en alignement avec les saillies (16) ;
un étrier de frein comprenant un rotor (14) qui présente des surfaces de friction opposées et qui est rotatif ;
un pont (32) qui est maintenu en contact avec l'élément de retenue (18) ;
le rotor (14) présentant des portions (28) d'étrier de frein opposées, et chaque portion (28) d'étrier de frein définissant un évidement (30) qui est agencé de manière à recevoir un patin (8) de frein à disque ;
les ouvertures (20) étant définies par des lèvres (22, 24) repliées vers le haut, formées sur des extrémités opposées ;
les lèvres (22, 24) repliées vers le haut exerçant une force élastique qui est dirigée contre les côtés opposés des saillies (16) s'étendant radialement et espacées les unes des autres sur la périphérie, de sorte que l'élément (18) est fixé sur la plaque d'appui (10) ;
les portions (28) d'étrier de frein opposées l'une à l'autre présentant des fentes (34) qui sont réalisées dans une portion radiale la plus extérieure desdites portions ;
le pont (32) étant agencé dans les fentes (34) ; et
les fentes (34) étant arrondies, et le pont (32) étant monté en rotation dans les fentes (34) des portions d'étrier de frein.

2. Frein à disque selon la revendication 1, dans lequel l'élément (18) comprend une portion (26) élastiquement déformable qui présente une élasticité orientée radialement en réaction à un déplacement dans cette direction.

3. Frein à disque selon la revendication 1 ou 2, dans lequel le pont (32) est retenu dans les fentes (34) par des éléments (36) cylindriques s'étendant axialement, qui sont agencés dans des ouvertures formées dans des extrémités opposées des fentes (34).

4. Frein à disque selon l'une quelconque des revendications précédentes, dans lequel l'élément de retenue (18) comprend une portion (26) élastiquement déformable qui est déformée élastiquement par le pont (32) après avoir monté les patins de frein à disque,

5. Frein à disque selon l'une quelconque des revendications précédentes, dans lequel une paire de lèvres (22, 24) est associée à chaque évidement (30), les lèvres (22, 24) étant agencées sur des côtés opposés de la saillie (16) correspondante.
